(19) Europäisches Patentamt
European Patent Office
Office européen des brevets

(11) **EP 1 984 309 B1**

(12) **FASCICULE DE BREVET EUROPEEN**

(45) Date de publication et mention
de la délivrance du brevet:
**05.04.2017 Bulletin 2017/14**

(21) Numéro de dépôt: **07730912.8**

(22) Date de dépôt: **02.02.2007**

(51) Int Cl.:
***C04B 24/32*** *(2006.01)*     ***C04B 24/26*** *(2006.01)*
***C04B 24/42*** *(2006.01)*

(86) Numéro de dépôt international:
**PCT/FR2007/000196**

(87) Numéro de publication internationale:
**WO 2007/090948 (16.08.2007 Gazette 2007/33)**

(54) **UTILISATION D'UN ADJUVANT A TITRE DE PLASTIFIANT POUR COMPOSITIONS HYDRAULIQUES**

VERWENDUNG EINES HILFSSTOFFS ALS PLASTIFIZIERER FÜR HYDRAULISCHE ZUSAMMENSETZUNGEN

USE OF AN ADJUVANT AS PLASTIFIER FOR HYDRAULIC COMPOSITIONS

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **06.02.2006 FR 0601043**

(43) Date de publication de la demande:
**29.10.2008 Bulletin 2008/44**

(73) Titulaire: **LAFARGE**
**75116 Paris (FR)**

(72) Inventeurs:
• **GEORGES, Sébastien**
**F-69780 Mions (FR)**
• **VILLARD, Emmanuel**
**F-42320 Saint-Christo-en-Jarez (FR)**
• **WATT, Olivier**
**F-38110 Saint Jean De Soudain (FR)**
• **GHILARDI, Serge**
**F-73420 Mery (FR)**

(74) Mandataire: **Regimbeau**
**20, rue de Chazelles**
**75847 Paris Cedex 17 (FR)**

(56) Documents cités:
WO-A-2006/032786     FR-A1- 2 861 400
US-A1- 2004 009 357     US-B2- 6 559 233

**EP 1 984 309 B1**

**Description**

La présente invention concerne le domaine des adjuvants pour compositions de liants hydrauliques, et en particulier des dispersants, plastifiants, superplastifiants et agents réducteurs d'eau.

Généralement, on ajoute aux compositions de liants hydrauliques tels que les ciments, des adjuvants permettant d'améliorer leurs propriétés. Parmi les propriétés fondamentales des compositions de ciment sont les propriétés rhéologiques et leur évolution avec le temps.

On utilise en particulier des plastifiants, lesquels ont pour effet de fluidifier des compositions de ciment et/ou permettent de réduire la quantité d'eau ajoutée. C'est pourquoi ils sont également désignés comme réducteurs d'eau. La composition de ciment présente alors une densité plus élevée et résulte en un matériau présentant une résistance mécanique plus élevée.

Certains polymères solubles, appelés superplastifiants, permettent d'améliorer encore la fluidité des compositions cimentaires et/ou de réduire davantage la quantité d'eau. On connaît notamment des superplastifiants de type acide polycarboxylique polyalkoxylé (PCP). Toutefois, ces adjuvants présentent aussi des inconvénients.

En particulier, on constate que leur performance est très sensible aux variations des formulations.

Ces écarts de performances rendent nécessaire de réaliser des essais afin de fixer le dosage d'adjuvant pour chaque liant hydraulique ou chaque granulat susceptible d'être mis en oeuvre.

Le document US 6,559,233 B2 divulgue un adjuvant comprenant un copolymère en bloc comprenant au moins deux blocs du même type et étant combiné avec au moins un bloc ayant une charge opposée, le copolymère étant mélangé dans une solution aqueuse avec un polymère cationique. L'adjuvant est utilisé pour épaissir des compositions cimentaires.

Le but de l'invention est de proposer l'utilisation des adjuvants dont la performance est peu sensible à la nature chimique de la composition hydraulique.

Ce but est atteint selon l'invention en associant dans un adjuvant deux polymères ioniques de charge opposée.

Les solutions de polymères hydrosolubles à charges opposées sont cependant souvent instables, car ils ont tendance à s'agréger en formant des clusters de charges opposées en se neutralisant, ce qui conduit à leur précipitation et à l'annulation de leur(s) propriété(s).

Or il a été constaté qu'une telle association peut être stable lorsque au moins l'un des deux types de polymères présente une structure peigne, comportant une chaîne principale et des groupes latéraux. Il est supposé que l'encombrement stérique sur le polymère à structure peigne permet de limiter l'accessibilité des charges et d'éviter ainsi une précipitation.

Selon un premier aspect, l'invention concerne donc l'utilisation d'un adjuvant à titre de plastifiant pour compositions de liants hydrauliques comprenant au moins un polymère cationique et au moins un polymère anionique, au moins l'un de ces polymères présentant une structure de type peigne, dans lequel le rapport massique polymère anionique/polymère cationique est compris entre 99,9/0,1 et 60/40.

Dans le cadre du présent exposé, on entend par le terme « composition de liant hydraulique » tout matériau à prise hydraulique, notamment les compositions comportant du ciment, tel que le ciment Portland. Ces compositions pourront être par exemple des mortiers comprenant en outre des granulats fins, ou des bétons, comprenant en outre des granulats grossiers. Le terme englobe également les sulfates de calcium anhydres ou semi-hydratés.

On entend désigner par le terme « polymère » une molécule constituée de monomères unis les uns aux autres par des liaisons covalentes et caractérisés par la répétition d'un ou plusieurs types de motifs. Ce terme vise les homopolymères, constitués par l'association de molécules provenant d'un seul motif, les copolymères, pour lesquels la polymérisation s'effectue sur deux monomères différents et les terpolymères, pour lesquels la polymérisation porte sur trois monomères différents. Les polymères obtenus à partir de plus de trois monomères différents sont également englobés.

On entend par le terme « polymère cationique » désigner un polymère dont une partie substantielle des unités de constitution porte une charge positive. Le « polymère cationique » peut porter également des charges négatives. Dans ce cas, les charges cationiques seront majoritaires par rapport aux charges anioniques.

De manière analogue, on entend par le terme « polymère anionique » désigner un polymère dont une partie substantielle des unités de constitution porte une charge négative. Le « polymère anionique » peut porter également des charges positives. Dans ce cas, les charges anioniques seront majoritaires par rapport aux charges cationiques.

Les polymères cationiques ou anioniques sont accompagnés de contre-ions. Ces derniers pourront être des chlorures, sulfates, nitrates, acétates, etc... pour les polymères cationiques, du sodium, potassium, ammonium, etc... pour les polymères anioniques. Les charges peuvent se situer au niveau de la chaîne principale ou sur les groupes latéraux. Les contre-ions n'affectent pas les propriétés du béton aux dosages préconisés.

On entend par le terme « polymère de structure peigne » désigner un polymère comportant une chaîne principale à laquelle sont rattachés des groupes latéraux. De préférence, les polymères de structure peigne comportent des groupes latéraux polyoxyalkylés. Il est également préféré qu'ils comportent dans leur chaîne principale des motifs dérivés d'acide (méth)acrylique ou maléique.

De manière générale, les polymères cationiques et anioniques appropriés pour l'adjuvant utilisé dans l'invention ne sont pas particulièrement limités.

Les groupes ioniques peuvent être introduits ou générés dans le polymère au moment de la polymérisation ou après, par exemple par greffage de groupe portant une fonction ionique.

Polymère cationique

L'adjuvant utilisé dans l'invention contient tout d'abord un polymère cationique.

Les groupes cationiques peuvent être notamment des groupes ammonium quaternaires, phosphonium, pyridinium, sulfonium. De préférence le groupe cationique sera un groupe ammonium quaternaire.

Le groupe ammonium quaternaire peut être obtenu par quaternisation d'un atome d'azote, lequel peut par exemple faire partie d'un groupe de type amine ou imine.

La quaternisation, connue en tant que telle, peut être réalisée notamment par réaction d'un groupe amine ou imine avec du chlorure de méthyle, ou par protonation.

Particulièrement appropriés sont donc des polymères contenant des motifs de type amine ou imine. Ces groupes peuvent être situés dans la chaîne principale du polymère, ou dans des groupes latéraux. De préférence, ils sont situés dans la chaîne principale.

Les polymères cationiques de structure peigne comportent avantageusement des groupes polyoxyalkylés à titre de groupes latéraux.

Les polymères cationiques peuvent être préparés par voie classique, notamment par polymérisation radicalaire ou par polycondensation.

Les monomères mis en oeuvre peuvent être des monomères cationiques, leurs précurseurs, et ou éventuellement en quantité moindre des co-monomères non ioniques ou anioniques.

Parmi les monomères cationiques appropriés, on peut citer le chlorure de diallyldiméthyl ammonium, le (méth)acrylate de dialkylaminoalkyl éventuellement quaternisé, et le (méth)acrylamide N-substitué par un dialkylaminoalkyl éventuellement quaternisé.

A titre de monomères non ioniques appropriés, on peut citer notamment des monomères tels que le (méth)acrylate de méthoxypolyéthylèneglycol, l'acrylamide, le N-vinylpyrrolidone, l'hydroxyéthyl (meth)acrylate, le N-vinyl-N-méthylacetamide, des (meth)acrylate d'alkyle.

Des polymères cationiques sont également accessibles par réaction d'une épihalohydrine ou d'un diépoxyde avec une dialkylamine, tel que décrit par exemple dans US 3,725,312 ou encore par polycondensation de dicyandiamide avec du formaldéhyde, comme décrit dans FR 1 042 084.

Les groupes cationiques peuvent également être introduits par modification d'un polymère par post-greffage. Ce procédé consiste à modifier une fonction réactive, par exemple un groupe hydroxyle ou amine, afin d'y introduire un groupe cationique. Cette voie permet notamment l'accès à des polymères cationiques d'origine naturelle, tels que des amidons greffés d'un groupe cationique.

Il est possible de modifier un (co)polymère d'acrylamide par réaction de Mannich avec un aldéhyde comme le formaldéhyde et une amine comme la diméthylamine.

L'adjuvant comprend comme deuxième composante un polymère anionique.

Les groupes anioniques préférés sont les groupes d'acide carboxylique comme l'acide (méth)acrylique et l'acide maléique ou d'acide sulfonique et leurs dérivés, notamment leurs sels.

A titre de polymères anioniques préférés peuvent être cités :

les polymères (méth)acryliques, maléiques, vinyliques, allyliques ;
les polynaphtalènes sulfonates ;
les lignosulfonates ;
les polymélamines sulfonates.

Les polymères anioniques peuvent être obtenus directement par polymérisation, notamment radicalaire, de monomères comportant des groupes anioniques ou par modification d'un polymère.

Parmi les monomères anioniques appropriés pour une polymérisation radicalaire, on peut mentionner notamment des monomères portant des fonctions carboxyliques tels que l'acide (méth)acrylique, l'acide itaconique, l'acide maléique, etc.., des monomères portant des fonctions sulfoniques tels que l'acide acrylamido-2-méthyl-2-propanesulfonique (AMPS), l'acide vinylsulfonique, le méthacrylate d'acide sulfopropylique ou des monomères portant des fonctions phosphoniques.

A titre de (co)monomères non ioniques sont particulièrement appropriés ceux qui comportent un ou plusieurs groupes silanols ou dérivés.

Ainsi, le polymère anionique comporte de préférence des groupes latéraux silanols.

Les polymères anioniques peuvent être de structure linéaire, ramifiée ou peigne, une structure en peigne étant préférée.

Les polymères de structure « peigne » peuvent être obtenus par plusieurs voies de synthèse, notamment par copolymérisation radicalaire, tel que décrit dans EP 0 056 627 ou par post greffage de groupes latéraux polyoxyalkylène, tel que décrit dans US 5,614,017.

Les polymères anioniques de structure peigne comportent avantageusement des groupes polyoxyalkylés à titre de groupes latéraux.

Avantageusement, les polymères anioniques sont des terpolymères.

Selon l'invention, au moins l'un des polymères présents dans l'adjuvant utilisé est de structure peigne. De préférence, il s'agit du polymère anionique.

La proportion des groupes ioniques dans le polymère cationique et anionique peut varier largement.

La densité de charge du polymère, exprimée en meq/g, représente la quantité de charge (en mmol) portée par 1g de polymère. Cette valeur peut être mesurée par titration colloïdale ou par titration pHmétrique.

La densité des groupes ioniques sur les polymères cationique et anionique peut varier largement, mais sera de préférence supérieure à 0,1 meq/g, de préférence supérieure à 0,2 meq/g, respectivement.

Avantageusement, la cationicité du polymère cationique ne dépend pas ou peu du pH.

Les polymères anioniques et cationiques présentent généralement une masse molaire moyenne comprise entre 10 000 et 1 M (Mw), de préférence entre 10 000 et 500 000 (Mw). La masse molaire peut être déterminée notamment par la mesure de viscosité intrinsèque ou par GPC.

De préférence, les polymères présentent une viscosité intrinsèque inférieure à 1,5 dl/g, en particulier inférieure à 1,0 dl/g, et tout particulièrement inférieure à 0,8 dl/g.

L'indice de polymérisation Ip est dé préférence compris entre 1 et 5, de préférence entre 1,5 et 3.

L'adjuvant décrit est préparé aisément, avec les moyens connus à cet effet, par exemple par simple mélange des polymères de charges opposées en solution, de manière connue par l'homme du métier.

Le rapport massique polymère anionique/polymère cationique est compris entre 99,9/0,1 à 60/40, de préférence de 99/1 à 70/30 et tout particulièrement de 98/2 à 80/20.

L'adjuvant utilisé a des propriétés de plastifiant remarquables et permet ainsi la préparation de compositions de liants hydrauliques fluides et/ou à teneur en eau réduite. Par ailleurs, il permet d'obtenir un maintien de fluidité des compositions de liants hydrauliques prolongé, jusqu'à 90 minutes. Le maintien de fluidité à 90 minutes est d'une importance particulière dans les compositions de liant hydraulique préfabriquées telles que le béton prêt à l'emploi.

Aussi, selon un dernier aspect, l'invention vise l'utilisation de l'adjuvant décrit en particulier pour le maintien de fluidité de compositions de liants hydrauliques, notamment les compositions de ciment, par exemple de ciment Portland, les mortiers et les bétons.

De préférence, l'adjuvant utilisé est ajouté à l'eau de gâchage de la composition de liant hydraulique. Il est également envisageable d'additionner l'adjuvant préalablement à l'une des matières premières de la composition, sans que cela affecte les propriétés de l'adjuvant. Le dosage d'adjuvant est déterminé selon la fluidité de la composition hydraulique recherchée. A titre d'exemple, pour des compositions de mortier, un dosage de 0,10 à 1% en poids sec de plastifiant par rapport au poids de ciment donne des résultats satisfaisants.

L'invention sera décrite plus en détail au moyen des exemples non limitatifs donnés ci-après.

### EXEMPLES:

### A. Caractérisation des polymères

Les polymères cationiques et anioniques sont caractérisés au moyen de leur poids moléculaire, leur ionicité et leur structure.

### a. Poids moléculaire

Le poids moléculaire des polymères utilisés peut être déterminé par analyse chromatographique ou à partir de la viscosité intrinsèque selon la relation de Mark-Houwink :

$$IV = K.Mr^a$$

IV : viscosité intrinsèque

Mr : poids moléculaire moyen

K et a : constantes dépendantes du polymère, du solvant et de la température.

Les mesures de viscosité intrinsèque des polymères cationiques sont réalisées avec un viscosimètre capillaire de type Ubbelhode dans une solution NaCl 3M à 25°C.

On mesure le temps d'écoulement dans le tube capillaire entre 2 repères, du solvant et de solutions du polymère à différentes concentrations. La viscosité intrinsèque est obtenue à partir des viscosités « réduites » à différentes concentrations.

Pour plus de détails concernant cette mesure, il est renvoyé à l'ouvrage suivant : Encyclopedia of Polymer Science & Technology, Editors Mark and Gaylord, published John Wiley & Sons, 1971, Vol.14, p. 717-740.

**b.** Densité de charge

La densité de charge cationique (cationicité) ou anionique (anionicité) exprimée en meq/g représente la quantité de charges (en mmol) portée par 1g de polymère. Cette valeur peut être mesurée par titration colloïdale ou par titration pHmétrique.

La densité de charge d'un polymère cationique peut être mesurée par titration par un polymère anionique d'ionicité connue, par exemple le polyvinylsulfate de potassium, en présence d'un indicateur dont la couleur dépend de la nature du polymère en excès.

**c.** Structure

La structure des polymères est déterminée par viscosimétrie, mesures rhéologiques et par analyse RMN.

**B. Préparation des polymères**

**a.** Préparation d'un copolymère d'acide méthacrylique/ méthacrylate de polyéthylèneglycolméthyléther 1100 (PA1)

Dans un réacteur adapté, muni d'une agitation mécanique, d'un système de chauffage et d'un inertage à l'azote, on charge :

| | |
|---|---|
| Tétrahydrofurane | 1502g |
| Acide méthacrylique | 113g |
| Méthacrylate de polyéthylèneglycolméthyléther 1100 | 887g |
| Acide mercaptoacétique | 2.g |

On prépare une solution d'un amorceur en pesant 5,27 g de 2,2'-Azobis-(2,4-dimethylvaleronitrile) (Vazo 52 de chez Dupont) dans 67g de tétrahydrofurane (THF).

On chauffe le milieu réactionnel à 60°C sous agitation en assurant un dégazage sous $N_2$. On ajoute la solution de catalyseur au milieu réactionnel et on laisse réagir la solution durant 5h30 à une température de 60°C. Afin de stabiliser le THF, on ajoute une petite quantité d'eau. On distille ensuite sous vide pour éliminer le solvant.

Le produit obtenu est un liquide visqueux que l'on dilue avec de l'eau pour obtenir une solution de concentration voisine de 20% en poids.

Le copolymère PA1 obtenu a un rapport molaire (ester/acide) de 38/62 et un poids moléculaire de 40000 g/mol et présente une structure peigne.

Un agent anti-mousse de type tributylphosphate est ajouté à la solution à un dosage de 0,5% massique/solution.

**b.** Préparation d'un terpolymère d'acide méthacrylique/ méthacrylate d'éthylphosphate/méthacrylate de iméthoxy PEG2000

Ce terpolymère est composé de 66 mol% d'acide méthacrylique, 9 mol% de méthacrylate d'éthyle phosphate et 25 mol % de méthacrylate de méthoxy PEG2000.

Dans un réacteur adapté muni d'une agitation mécanique, d'un système de chauffage et d'un inertage à l'azote, on charge :

| | |
|---|---|
| Eau (fond de cuve) | 1250g |

(suite)

| | |
|---|---|
| Acide méthacrylique (phase monomères) | 49.3g |
| Méthacrylate de polyéthylèneglycolméthyléther 2000 - concentration massique 50% (phase monomères) | 869g |
| Méthacrylate d'éthylphosphate (phase monomères) | 16.4g |
| sel de sodium de l'acide 3-mercaptopropanesulfonique | 80.6g |

On prépare une solution d'un amorceur en pesant 12.28g de 2,2'-Azobis-(2-méthylpropionamidine)dihydrochlorure (V50 de chez Wako) dans 67g d'eau (solution d'initiateur).

On charge dans le réacteur la quantité d'eau (fond de cuve). On chauffe à 60°C sous agitation, et en assurant un dégazage sous $N_2$. On ajoute alors le sel de sodium de l'acide 3-mercaptopropanesulfonique. La phase monomère est alors ajoutée en continu en 90 minutes, simultanément à la solution d'initiateur qui est ajoutée en 120 minutes. La température est maintenue à 60°C pendant les 120 minutes de coulée.

Le produit obtenu est un liquide visqueux que l'on dilue avec de l'eau pour obtenir une solution de concentration voisine de 20% en poids.

Le terpolymère obtenu possède un poids moléculaire de 40000 g/mol et présente une structure peigne.

Un agent anti-mousse de type tributylphosphate est ajouté à la solution à un dosage de 0,5% massique/solution.

**c.** Préparation d'un terpolymère d'acide méthacrylique / méthacrylate de propyltriméthoxysilyle / méthacrylate de méthoxy PEG11000

Ce terpolymère est composé de 42 mol% d'acide méthacrylique, 10 mol% de méthacrylate de propyltriméthoxysilyle et 48 mol% de méthacrylate de méthoxy PEG1100.

Dans un réacteur adapté muni d'une agitation mécanique, d'un système de chauffage et d'un inertage à l'azote, on charge :

| | |
|---|---|
| Acide méthacrylique | 30.7g |
| Méthacrylate de propyltriméthoxysilyle | 21.2g |
| Méthacrylate de méthoxy PEG1100 | 448.3g |
| Acide thioglycolique | 4.81 g |

On pèse dans le réacteur l'acide méthacrylique, le méthacrylate de propyle triméthoxysilyle, le méthacrylate de méthoxy PEG1100. On chauffe à 80°C sous agitation, et en assurant un dégazage sous $N_2$. On ajoute alors l'acide thioglycolique ainsi que 8.62g d'AIBN. On maintient ensuite pendant 2 heures le milieu réactionnel à 80°C.

Le produit obtenu est un liquide visqueux que l'on dilue avec de l'eau pour obtenir une solution de concentration voisine de 20% en poids.

La synthèse aboutit à un terpolymère possédant un poids moléculaire de 40000 g/mol présentant une structure peigne.

Un agent anti-mousse de type tributylphosphate est ajouté à la solution à un dosage de 0,5% massique/solution.

Le polymère anionique PA2 est préparé par mélange de 20% en poids de polymère anionique préparé selon le protocole b. et de 80% en poids de polymère anionique préparé selon le protocole c. indiqué ci-dessus.

**d.** Préparation d'un copolymère méthylsulfate de méthacrylate d'éthyltriméthylammonium / méthacrylate de méthoxy PEG PC 2)

Dans un réacteur adapté muni d'une agitation mécanique, d'un système de chauffage et d'un inertage à l'azote, on charge :

| | |
|---|---|
| Eau | 200g |
| Méthacrylate de méthoxy PEG 1100 (20 mol%) | 49.3g |
| Méthylsulfate de méthacrylate d'éthyltriméthylammonium (concentration massique 80 %) | 63.4g |
| Sel de sodium de l'acide 3-mercaptopropanesulfonique | 1g |

On pèse dans le réacteur la quantité d'eau nécessaire que l'on porte à 60°C sous agitation, et en assurant un dégazage sous $N_2$ pendant 30 minutes. On ajoute alors le sel de sodium de l'acide 3-mercaptopropanesulfonique, puis les monomères et enfin 24.28g de 2,2'-Azobis-(2-méthylpropionamidine) dihydrochlorure (V50 de chez Wako). On maintient alors pendant 2 heures le milieu réactionnel à 60°C.

Le produit obtenu est un liquide visqueux que l'on dilue avec de l'eau pour obtenir une solution de concentration voisine de 20% en poids.

La synthèse aboutit à un copolymère PC 2 possédant un poids moléculaire de 40000 g/mol et présentant une structure peigne.

Un agent anti-mousse de type tributylphosphate est ajouté à la solution à un dosage de 0,5 % massique/solution.

### C. Evaluation des adjuvants

L'efficacité des adjuvants est déterminée par mesure d'étalement à 5, 15, 30, 60 et 90 minutes, de mortiers préparés avec des matières premières de différentes provenances.

Dans le protocole suivant, le plastifiant est ajouté à l'eau de gâchage.

Dans le bol d'un malaxeur Perrier, on introduit le sable, puis l'eau de pré-mouillage en agitant à faible vitesse (140 tr/min). On laisse reposer pendant 4 minutes avant d'introduire les liants (ciment, filler). On malaxe à nouveau pendant 1 minute à petite vitesse puis on ajoute en 30 secondes à petite vitesse l'eau de gâchage additionnée de l'adjuvant. Enfin, on malaxe encore 2 minutes à 280 tr/min.

La performance des adjuvants a été testée pour deux sables et deux ciments différents, dont la provenance est indiquée au tableau 1 ci-dessous.

Les 2 sables sont de provenances différentes. Le ciment N°1 contient plus de sulfates que le ciment N°2.

**Tableau 1 :** Provenance des sables et ciments testés

| Sable N°1 | Sable siliceux normalisé conforme à la norme EN 196.1 de la société nouvelle du littoral |
|---|---|
| Sable N°2 | Sable silicocalcaire de la carrière de Palvadeau (Lafarge) |
| Ciment N°1 | CEM I - 52.5N - Saint Pierre La Cour (Lafarge) |
| Ciment N°2 | CEM I - 52.5N - Le Havre (Lafarge) |

La composition des mortiers préparés avec les sables N°1 et N°2 est indiquée dans les tableaux 2 et 3 ci-dessous respectivement.

**Tableau 2 :** Composition de mortier avec sable N°1

| | Quantité en g |
|---|---|
| Ciment CEM I 52.5 N selon EN 197 | 480.4 |
| Filler calcaire | 359.1 |
| Sable normalisé 0/2mm | 1350 |
| Sable PE2LS B2 | 200.1 |
| Eau de prémouillage | 100 |
| Plastifiant (sec) | X |
| Eau de gâchage | 227 |
| Eau totale | 327 |

**Tableau 3 :** Composition de mortier avec sable N°2

| | Quantité en g |
|---|---|
| Ciment CEM I 52.5 N selon EN 197 | 625.2 |
| Filler BL 200 | 416.2 |
| Sable palvadeau 0/0.315mm | 444.3 |
| Sable palvadeau 0.315/1 mm | 880.1 |
| Sable palvadeau 1/4mm | 470.1 |

(suite)

| | Quantité en g |
|---|---|
| Sable palvadeau 2/4mm | 163.2 |
| Eau de prémouillage | 117.5 |
| Plastifiant (sec) | Y |
| Eau de gâchage | 290.8 |
| Eau totale | 408.3 |

Les adjuvants utilisés dans l'invention ont été préparés en mélangeant un polymère anionique avec un polymère cationique en solution aqueuse à 20% de poids dans les proportions indiquées dans le tableau 4.

**Tableau 4 :** Composition des adjuvants

| Exemple | Polymère cationique (PC) | Polymère anionique (PA) | Ratio massique PC /PA |
|---|---|---|---|
| 1 | PC N°1* | PA N°1 | 1/99 |
| 2 | PC N°1* | PA N°1 | 5/95 |
| 3 | PC N°1* | PA N°1 | 20/80 |
| 4 | PC N°2 | PA N°1 | 30/70 |
| 5 | PC N°2 | PA N°1 | 20/80 |
| 6 | PC N°1* | PA N°2 | 5/95 |
| 7 | PC N°1* | PA N°2 | 20/80 |
| 8 | PC N°3[+] | PA N°2 | 5/95 |

* Polycondensat épichlorhydrine - diméthylamine (FL2250 de chez SNF, France). Ce polymère est linéaire, a une cationicité de 7,3 meq/g et une viscosité intrinsèque de 0,04 dl/g.
[+] Polycondensat dicyandiamide-formaldéhyde-$NH_4Cl$ (DEC 50 de chez SNF, France). Ce polymère contient peu d'ions chlorures.

Les mesures d'étalement sont réalisées comme suit. On remplit un moule sans fond de forme tronconique, de reproduction à l'échelle 0,5 du cône d'Abrams (voir norme NF 18-451, 1981) de dimensions suivantes :

diamètre du cercle de la base supérieure 50 +/- 0,5 mm
diamètre du cercle de la base inférieure 100 +/- 0,5 mm
hauteur 150 +/- 0,5 mm

d'un mortier fraîchement préparé en trois couches de volume identique, puis on pique entre chaque couche le mortier 15 fois à l'aide d'une tige de piquage en acier de 6 mm de diamètre et à extrémité sphérique. On arase la surface supérieure du cône puis on soulève le cône verticalement. L'étalement est mesuré à intervalles de temps déterminés selon quatre diamètres à 45° avec un pied à coulisse. Le résultat de la mesure d'étalement est la moyenne des quatre valeurs à +/- 1 mm. Les essais sont réalisés à 20°C.

Afin d'évaluer la sensibilité des plastifiants utilisés dans l'invention, des mesures d'étalement ont été réalisées en variant la nature du sable et du ciment. A titre de comparaison, on a réalisé des mesures avec les polymères anioniques seuls. Les résultats sont portés dans le tableau 5 ci-dessous. Le dosage est exprimé en % en poids sec de plastifiant par rapport au poids de ciment dans la composition de mortier. Le dosage est ajusté de manière que l'étalement à 15 minutes soit d'environ 300 à 340 mm.

**Tableau 5 :** Maintien de fluidité

| Exemple | Sable | Ciment | Dosage | Etalement [mm] | | | | |
|---|---|---|---|---|---|---|---|---|
| | | | | 5 min | 15 min | 30 min | 60 min | 90 min |
| PA1 | 1 | 1 | 0.31 | 345 | 340 | 340 | 335 | 335 |
| | 1 | 2 | 0.13 | 320 | 305 | 280 | 255 | 230 |
| | 2 | 1 | 0.35 | 320 | 320 | 305 | 300 | 285 |
| | 2 | 2 | 0.20 | 325 | 305 | 280 | 250 | 225 |
| PA2 | 1 | 1 | 0.27 | 290 | 310 | 330 | 340 | 325 |
| | 1 | 2 | 0.21 | 320 | 325 | 315 | 290 | 270 |
| | 2 | 1 | 0.50 | 295 | 330 | 345 | 345 | 345 |
| | 2 | 2 | 0.32 | 310 | 320 | 290 | 260 | 240 |
| 1 | 1 | 2 | 0.13 | 330 | 315 | 300 | 285 | 255 |
| | 2 | 1 | 0.36 | 320 | 315 | 310 | 305 | 295 |
| 2 | 1 | 1 | 0.29 | 330 | 330 | 325 | 325 | 325 |
| | 1 | 2 | 0.14 | 330 | 315 | 305 | 290 | 260 |
| | 2 | 1 | 0.37 | 320 | 315 | 315 | 305 | 300 |
| 3 | 1 | 2 | 0.19 | 325 | 335 | 320 | 300 | 270 |
| 4 | 1 | 2 | 0.18 | 325 | 315 | 300 | 280 | 260 |
| | 2 | 2 | 0.33 | 325 | 325 | 315 | 300 | 285 |
| 5 | 2 | 1 | 0.55 | 315 | 310 | 310 | 310 | 320 |
| 6 | 1 | 1 | 0.24 | 275 | 305 | 325 | 335 | 325 |
| | 1 | 2 | 0.21 | 305 | 330 | 325 | 310 | 285 |
| | 2 | 1 | 0.38 | 280 | 315 | 330 | 335 | 330 |
| | 2 | 2 | 0.32 | 320 | 345 | 340 | 320 | 305 |
| 7 | 1 | 1 | 0.30 | 270 | 305 | 315 | 335 | 330 |
| | 1 | 2 | 0.24 | 305 | 325 | 315 | 310 | 285 |
| | 2 | 1 | 0.42 | 265 | 305 | 320 | 330 | 320 |
| | 2 | 2 | 0.37 | 325 | 345 | 335 | 325 | 290 |
| 8 | 2 | 1 | 0.40 | 290 | 310 | 320 | 320 | 320 |
| | 2 | 2 | 0.32 | 320 | 335 | 340 | 325 | 295 |

On peut constater à partir des résultats que les adjuvants contenant un polymère cationique et un polymère anionique sont plus efficaces comparé un polymère anionique seul.

En effet, l'utilisation d'un mélange de polymère cationique/polymère anionique permet de diminuer l'écart de dosage observé entre les différentes compositions de mortier pour les polymères anioniques seuls. Ainsi, pour l'exemple 6 et 7, on constate que cet écart de dosage est de 0,17 et 0,18% en poids, alors qu'il est de 0,22 et 0,23% en poids pour les polymères anioniques seuls.

Par ailleurs, on remarque que la présence même minime de polymère cationique (1 à 5% en poids) dans l'adjuvant selon l'exemple 1 et 2, améliore à dosage égal le maintien de fluidité dans le temps en comparaison au polymère anionique seul.

Ainsi, on observe pour un mortier préparé avec le ciment du Havre (ciment 2) et le sable silicocalcaire de Palvadeau (sable 2) ayant un faible maintien dans le temps, une amélioration d'au moins 20% de l'étalement à 90 minutes comparé aux polymères anioniques seuls.

Cette amélioration est particulièrement notable au niveau des compositions ayant un faible maintien dans le temps. Il en résulte un rapprochement des temps de maintien observés pour les différents mortiers étudiés.

En conclusion, il apparaît de ses essais qu'un adjuvant comprenant un polymère anionique et un polymère cationique tel que décrit permet d'atténuer les différences de dosages pour des liants hydrauliques de composition chimique différente et d'améliorer la perte de maintien de liants hydrauliques.

## Revendications

1. Utilisation d'un adjuvant à titre de plastifiant pour compositions de liants hydrauliques comprenant au moins un polymère cationique et au moins un polymère anionique, au moins l'un de ces polymères présentant une structure de type peigne, dans lequel le rapport massique polymère anionique/polymère cationique est compris entre 99,9/0,1 et 60/40.

2. Utilisation selon la revendication 1, dans lequel le polymère anionique comporte des groupes latéraux silanols.

3. Utilisation selon la revendication 1 ou 2, dans lequel le polymère anionique présente une structure de type peigne.

4. Utilisation selon l'une des revendications 1 à 3, dans lequel le polymère présentant une structure de type peigne comporte des groupes latéraux polyoxyalkylés.

5. Utilisation selon l'une des revendications 1 à 4, dans lequel le polymère présentant une structure de type peigne comporte dans sa chaîne principale des motifs dérivés d'acide (méth)acrylique.

6. Utilisation selon l'une des revendications 1 à 5, dans lequel le polymère anionique a une viscosité intrinsèque inférieure à 1,5dl/g.

7. Utilisation selon l'une des revendications 1 à 6, dans lequel le polymère anionique a une viscosité intrinsèque inférieure à 1,0dl/g.

8. Utilisation selon l'une des revendications 1 à 7, dans lequel le polymère anionique a une viscosité intrinsèque inférieure à 0.8dl/g.

9. Utilisation selon l'une des revendications 1 à 8, dans lequel la cationicité du polymère cationique ne dépend pas du pH.

10. Utilisation selon la revendication 1, pour le maintien de fluidité de compositions de liants hydrauliques.

11. Utilisation selon l'une des revendications précédentes, dans laquelle la composition de liant hydraulique est une composition de ciment.

## Patentansprüche

1. Verwendung eines Hilfsstoffs als Plastifizierer für Zusammensetzungen hydraulischer Bindemittel, umfassend mindestens ein kationisches Polymer und mindestens ein anionisches Polymer, wobei mindestens eines dieser Polymere eine Struktur vom Typ Kamm aufweist, wobei das Massenverhältnis anionisches Polymer/kationisches Polymer im Bereich zwischen 99,9/0,1 und 60/40 liegt.

2. Verwendung nach Anspruch 1, wobei das anionische Polymer Silanol-Seitengruppen aufweist.

3. Verwendung nach Anspruch 1 oder 2, wobei das anionische Polymer eine Struktur vom Typ Kamm aufweist.

4. Verwendung nach einem der Ansprüche 1 bis 3, wobei das Polymer, das eine Struktur vom Typ Kamm aufweist, Polyoxyalkyl-Seitengruppen aufweist.

5. Verwendung nach einem der Ansprüche 1 bis 4, wobei das Polymer, das eine Struktur vom Typ Kamm aufweist, in seiner Hauptkette von (Meth)acrylsäure abgeleitete Motive aufweist.

6. Verwendung nach einem der Ansprüche 1 bis 5, wobei das anionische Polymer eine intrinsische Viskosität unter 1,5 dl/g hat.

7. Verwendung nach einem der Ansprüche 1 bis 6, wobei das anionische Polymer eine intrinsische Viskosität unter 1,0 dl/g hat.

8. Verwendung nach einem der Ansprüche 1 bis 7, wobei das anionische Polymer eine intrinsische Viskosität unter 0,8 dl/g hat.

9. Verwendung nach einem der Ansprüche 1 bis 8, wobei die Kationizität des kationischen Polymers nicht vom pH abhängt.

10. Verwendung nach Anspruch 1 für die Aufrechterhaltung von Fluidität von hydraulischen Bindemittelzusammensetzungen.

11. Verwendung nach einem der vorangehenden Ansprüche, wobei die hydraulische Bindemittelzusammensetzung eine Zementzusammensetzung ist.


**Claims**

1. Use of an admixture as a plasticizer for hydraulic binder compositions comprising at least one cationic polymer and at least one anionic polymer, at least one of the polymers having a comb type of structure, wherein the anionic polymer/cationic polymer mass ratio is comprised from 99.9/0.1 to 60/40.

2. The use according to claim 1, wherein the anionic polymer comprises silanol side groups.

3. The use according to claim 1 or 2, wherein the anionic polymer has a comb type of structure.

4. The use according to one of claims 1 to 3, wherein the polymer having a comb type of structure comprises polyoxyalkylenated side groups.

5. The use according to one of claims 1 to 4, wherein the polymer having a comb type of structure comprises moieties on its main chain derived from methacrylic acid.

6. The use according to one of claims 1 to 5, wherein the anionic polymer has an intrinsic viscosity lower than 1.5 dl/g.

7. The use according to one of claims 1 to 6, wherein the anionic polymer has an intrinsic viscosity lower than 1.0 dl/g.

8. The use according to one of claims 1 to 7, wherein the anionic polymer has an intrinsic viscosity lower than 0.8 dl/g.

9. The use according to one of claims 1 to 8, wherein the cationic polymer's cationicity does not depend on the pH.

10. The use according to claim 1, for fluidity retention in hydraulic binder compositions.

11. The use according to one of the preceding claims, wherein the hydraulic binder composition is a cement composition.

## RÉFÉRENCES CITÉES DANS LA DESCRIPTION

**Documents brevets cités dans la description**

- US 6559233 B2
- US 3725312 A
- FR 1042084
- EP 0056627 A
- US 5614017 A

**Littérature non-brevet citée dans la description**

- Encyclopedia of Polymer Science & Technology. John Wiley & Sons, 1971, vol. 14, 717-740